(19) Europäisches Patentamt
European Patent Office
Office européen des brevets

(11) **EP 2 095 588 B1**

(12) **EUROPEAN PATENT SPECIFICATION**

(45) Date of publication and mention
of the grant of the patent:
**11.08.2010 Bulletin 2010/32**

(21) Application number: **07822391.4**

(22) Date of filing: **08.11.2007**

(51) Int Cl.:
*H04L 27/00* (2006.01)     *H04L 27/26* (2006.01)

(86) International application number:
**PCT/EP2007/062089**

(87) International publication number:
**WO 2008/077679 (03.07.2008 Gazette 2008/27)**

(54) **METHOD OF AND APPARATUS FOR ADAPTIVE FREQUENCY ERROR ESTIMATION**

VERFAHREN UND VORRICHTUNG ZUR ADAPTIVEN FREQUENZFEHLERSCHÄTZUNG

PROCÉDÉ ET APPAREIL POUR UNE ESTIMATION D'ERREUR DE FRÉQUENCE ADAPTATIVE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **22.12.2006 US 615877**

(43) Date of publication of application:
**02.09.2009 Bulletin 2009/36**

(73) Proprietor: **Telefonaktiebolaget LM Ericsson
(publ)
164 83 Stockholm (SE)**

(72) Inventors:
• **LINDOFF, Bengt
237 36 Bjärred (SE)**
• **BERNHARDSSON, Bo
224 75 Lund (SE)**
• **NILSSON, Johan
236 38 Höllviken (SE)**

(74) Representative: **Bratt, Hanna Catharina et al
Ericsson AB
Patent Unit Mobile Platforms
Nya Vattentornet
221 83 Lund (SE)**

(56) References cited:
EP-A- 1 764 968     WO-A-02/29978
WO-A1-2005/029722     US-A1- 2004 110 461

**Description**

BACKGROUND

The present invention relates to cellular communication networks. More particularly, and not by way of limitation, the present invention is directed to an apparatus and method adapted to determine which, of a plurality of automatic frequency correction algorithms, to use during communication between a user equipment (UE) and cell.

In the evolution of mobile cellular communication standards such as Global System for Mobile Communication (GSM) and Wideband Code Division Multiple Access (WCDMA), new modulation techniques such as Orthogonal Frequency Division Multiplexing (OFDM) are likely to be implemented. In order to transition the existing cellular communication systems to the new high capacity, high data rate system in the existing radio spectrum, a new system able to operate on a flexible bandwidth (BW) is required. One such flexible cellular system is known as 3rd Generation (3G) Partnership Project Long Term Evolution (3G LTE). 3G LTE is an evolution of the 3G WCDMA standard. 3G LTE will likely use OFDM and operate on BWs spanning from 1.25 MHz to 20 MHz.

It is anticipated that 3G LTE will facilitate data rates up to 100 megabits per second (Mb/s), however, low data rate services, such as voice telephony, will also be used in 3G LTE systems. Because 3G LTE has been designed using the transmission control protocol/internet protocol (TCP/IP), packet based voice over IP (VoIP) will be the service that carries speech. One power saving technique that can be used with VoIP, in a manner similar to that used by GSM systems, is discontinuous reception/discontinuous transmission (DRX/DTX). DRX/DTX turns the receiver and transmitter on and off between data packets. However, to be workable, the system, and in particular, the User Equipment (UE), which can be a mobile terminal, telephone, mobile station, laptop computer or the like, must obtain and maintain robust time and frequency synchronization. WO 2005/029722 (PHILIPS) published 31.03.2005 discloses a known method and apparatus for time and frequency synchronisation. Without robust time and frequency synchronization, a local oscillator in the UE may drift between received packets resulting in missed or faulty data packets. Hence, what is desired in a UE is a method and apparatus adapted to perform robust automatic frequency correction (AFC).

AFC algorithms are known in the art and are used in GSM, WCDMA and OFDM systems such as Digital Video Broadcast - Handheld (DVB-H) and Wireless-Local Area Network (WLAN). Conventionally, there are two AFC algorithms that are used in OFDM. Both algorithms assume that time synchronization, i.e. the timing of OFDM symbols, are known. There are several known methods for obtaining time synchronization and hence these are not described in depth herein. For example, in 3G LTE, time synchronization can be obtained from the synchronization channel (SCH).

The first of the two algorithms relies on using the cyclic prefix (CP) introduced in OFDM to make OFDM robust against time dispersion. In this algorithm, referred to as the CP correlation algorithm, the OFDM symbol is correlated over the CP:

$$d_{cp}(n) = \frac{1}{N_{cp}} \sum_{k=1}^{N_{cp}} x_k x_{k+\tau_s}^*$$

$$D_{cp}(n) = \lambda_1 D_{cp}(n-1) + (1 - \lambda_1) d_{cp}(n), \lambda_1 \in (0,1)$$

(1)

where x is the signal in the time domain, x* is the complex conjugate of the signal x, $\lambda_1$ is a constant that determines over how many signals to filter, $N_{cp}$ is the length of the CP (in samples) and $\tau_s$ is the length of the OFDM symbol. Furthermore **n** is the OFDM symbol index, and hence the CP correlation is averaged over a number of OFDM symbols. An estimate of the frequency error can then be obtained from the angle of **D** (assuming the radio channel is constant over the entire OFDM symbol):

$$\hat{f}_{err} = \frac{\arg D_{cp}}{2\pi\tau_s}$$

(2)

The second algorithm, referred to as the pilot symbols algorithm, is based on performing the same type of correlation but in the frequency domain, following Fast Fourier Transform (FFT), using pilot symbols:

$$d_{pilot}(n) = \sum_{i \in pilotcarriers} X_{n,i} X^*_{n+k,i}$$

$$D_{pilot}(n) = \lambda_2 D_{pilot}(n-1) + (1-\lambda_2)d_{cp}(n), \lambda_2 \in (0,1)$$

$$\hat{f}_{err} = \frac{\arg D_{pilot}}{2\pi\tau_n}.$$

(3)

where $X_{n,i}$ is the pilot symbol at sub-carrier $i$ at time n, $X^*_{n+k,i}$ is the complex conjugate of the pilot symbol at sub-carrier $i$ at time $n+ k$. $k$ is the number of symbols between two pilot symbols on carrier i, $\lambda_2$ is a constant that determines over how many symbols to filter, and $\tau_n$ is the time between pilots on the same sub-carrier. The advantage of using the CP correlation algorithm over the pilot symbols algorithm is that CP correlation provides a higher Nyquist frequency, making the CP correlation algorithm more robust against Doppler spreading. However, if the frequency error is small, the rotation during an OFDM symbol is also small making the estimate more sensitive to noise compared to the pilot symbols algorithm. In any event, potential problems arise using either of these algorithms in a 3G LTE system. In order to use 3G LTE in the current WCDMA spectrum, a 3G LTE system should be able to operate in a reuse one fashion as is done in WCDMA. This implies that the SNR at the cell border could be well below 0 dB. However, 3G LTE does not use spreading codes and therefore has less processing gain resulting in a lower ability to suppress noise. This directly affects the frequency synchronization algorithms, increasing the need for long term averaging (larger λ) in order to suppress the noise. Because more time is required to average in order to obtain a satisfactory frequency estimate, the UE must be in awake mode longer in the VoIP scenarios. As a result, the DRX/DTX periods will become much shorter, increasing the current consumption of the UE.

SUMMARY

This present invention is an adaptive frequency estimation method, and apparatus implementing the method, that adapts, from time to time, between the CP correlation algorithm and pilot symbols algorithm, depending on the values of several variables, including service (VoIP/high data rate), signal to noise ratio (SNR), Doppler spread, system BW, and whether the system is time division duplex (TDD) or frequency division duplex (FDD). The method and apparatus is also adapted to select both algorithms.

Furthermore, depending on the values of such variables, the UE determines, in accordance with the present invention, whether frequency estimates are based only on the serving/camping cell (active/idle mode) or if other detected cells (detected by the cell searcher, and used as potential handover (HO) candidates) should be used. This is typically the case at the cell border where the SNR can be improved significantly if more than one cell (for instance, using the CP correlation algorithm) is used for frequency error correction.

BRIEF DESCRIPTION OF THE SEVERAL VIEWS OF THE DRAWINGS

In the following section, the invention will be described with reference to exemplary embodiments illustrated in the figures, in which:

FIG. 1 is a flow chart of the method of the present invention; and

FIG. 2 is a block diagram of an apparatus adapted to implement the method of the present invention.

DETAILED DESCRIPTION

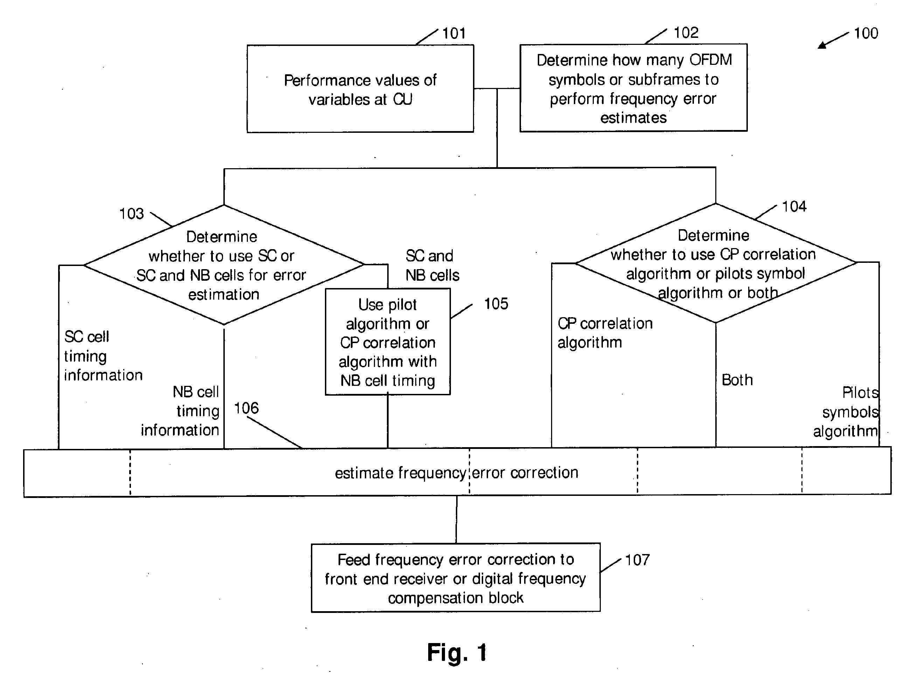

A flow chart 100 of the method of the present invention can be seen in Figure 1. As seen therein, in step 101, values of several variables are sent to or are calculated by a control unit (CU) of a User Equipment (UE). Such variables include current service, such as VoIP and low power mode/high data rate, continuous reception, Doppler spread, whether there is a line-of sight channel, as determined in a channel estimator unit, system BW, being 1.25 to 20 MHz in a 3G LTE system, and whether TDD or FDD is used. In step 102, the CU determines how many OFDM symbols or subframes over which to perform frequency error estimates (i.e. the value of $\lambda$). Based on the values of the variables, in steps 103 and 104, a CU determines decision whether to use only a serving cell (SC) for frequency error estimates or the SC and also neighboring (NB) cells, and also whether to use the CP correlation algorithm (1)) or frequency error detection based on pilot symbols algorithm (3), or a combination of these algorithms. In step 105, if the CU determines to use the NB cells for AFC, it can either use the pilot symbols algorithm, and hence perform the FFT using the NB cell timing or use the CP correlation algorithm and hence perform the CP correlation using NB cell timing. In step 106, the frequency error is estimated. In step 107, a combined estimated frequency error is fed back to the analog front end of the UE and the local oscillator frequency of the UE is adjusted. Alternatively, in step 107, a digital frequency compensation block can perform the frequency error correction.

In the case where the UE is in idle mode, the UE is not connected to a SC. In that case, the UE camps on one cell, is activated at regular time intervals, and performs paging detection from that cell. However, the method of the present invention can still be performed as described above. In that case, the UE, based on a number of parameters, determines which AFC algorithm is to be used and whether only the cell the UE is camping on or any other detected NB cells should be included in making frequency error estimates.

The following sets forth a number of examples of how the CU determines which AFC algorithms are to be used and if only SC or camping cells alone or with NB cells should be included in the frequency error estimation. Such determination can be made, for example, using software executed by a hardware portion of the CU.

*TDD/FDD and SNR.* In TDD, which is where up-link and down-link are time multiplexed on the same carrier. As a result, the cells must be synchronized, that is all cells need to be time aligned within approximately the cyclic prefix. In this case, the UE only needs to perform CP correlation for the SC as all other cells are time synchronized and therefore are implicitly, coherently added in the CP correlation from the SC. Hence, the effective SNR will be high. For high SNRs, only the SC is needed and thus the use of the CP correlation algorithm is preferred. This is also applicable to synchronized FDD systems. For a non-synchronized FDD system, the SNR could be very low at the cell border. Hence, for low SNR (e.g., less than 0 dB) there will be an advantage to using the detected NB cells for frequency error estimation.

*Doppler.* If the UE is in motion such that the channel experiences high Doppler spread, the CP correlation algorithm is more effective than the pilot symbols algorithm, due to the higher Nyquist frequency achieved. However, for very high Doppler spread and a line-of-sight channel where the Doppler spread starts to behave similar to a frequency error, the frequency error estimate could be different for different cells. Hence, when a high Doppler spread and line-of-sight is detected, the UE would use the frequency error estimate only from the SC. However, the frequency error for NB cells should also be estimated, but not combined, in order to obtain a fast frequency error estimate for the new cell in the event of a handover.

*Service.* As noted above, when the service is VoIP, DRX/DTX is often being used. In DRX/DTX, there is a potential for frequency drift due to the cooling and heating of components within the UE that occurs when turning the receiver and transmitter on and off. Because a high Nyquist frequency is desirable, use of the CP correlation algorithm is preferable. However, with high data rates and during continuous reception there is less frequency drift from heating and cooling cycles, such that the pilot symbols algorithm is preferable for frequency error estimation.

*System BW.* In 3G LTE, the CP is 4.7 microseconds ($\mu$s) regardless of the BW. Hence, the effective number of CP samples is 16 times smaller for a BW that is 1.25 MHz compared to a BW that is 20 MHz. As a result, the coherence gain in averaging over the CP is much smaller for 1.25 MHz compared to 20 MHz. Therefore, in the low BW scenario, it is preferable to use pilot symbols algorithm for estimating the frequency error.

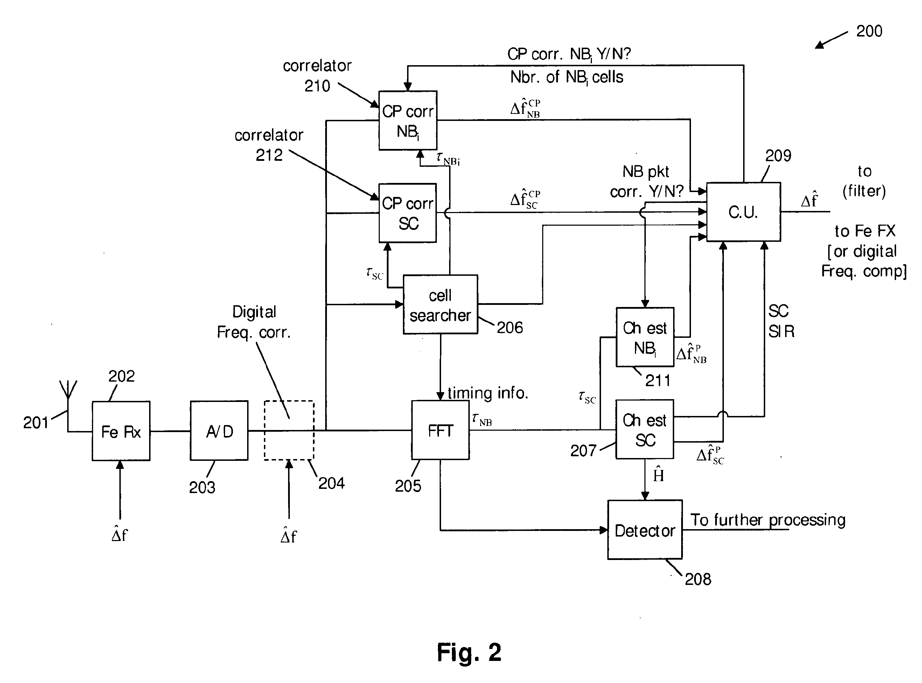

Figure 2 is a block diagram 200 of an apparatus that is adapted to implement the method of the present invention as described above. Figure 2 initially assumes that the UE is in active mode such that it has a connection with a SC and is in synchronization with the SC. The idle mode case is described later.

As seen therein, the signal is received at antenna 201 and down converted to a baseband signal in the front end receiver (Fe RX) 202. The signal is converted from analog to digital form at A/D unit 203. Digital frequency correction (as described in more detail below) occurs at digital frequency correction module 204. The signal is then provided from A/D unit 203 to Fast Fourier Transform (FFT) unit 205 and the cell search (CS) unit 206. CS unit 206 correlates the SC SCH signal to the received signal at regular intervals in order to maintain the time synchronization, $\tau_{sc}$, which is the time instant the FFT signal should be sampled (CP correlator SC unit 212). The CS unit 206 also, at regular time intervals, searches for new NB cells to be used as potential HO candidates. For all detected NB cells, the timing information, $\tau_{NB_i}$ associated therewith are stored and updated regularly at CP correlator NBi unit 210.

The signal from the FFT unit 205 is provided to the SC channel estimation unit 207 where the channel and the SIR are estimated using the known pilot symbols. That information is then used in detector unit 208 to detect the data, as is known in the art. The SIR is fed to CU 209 that also receives information about current service (e.g., VoIP and low power mode/high data rate, continuous reception), Doppler spread and whether there is a line-of sight channel (determined in the channel estimator unit 207), system BW (1.25 to 20 MHz if 3G LTE) and whether TDD or FDD is being used. Based on these parameters, the CU 209 determines whether to use only the SC for frequency error estimates or use SC and NB cells for frequency error estimates, and also whether to use the CP correlation algorithm or the pilot symbols algorithm, or a combination of these algorithms. Also, the number of OFDM symbols or subframes over which to perform frequency error estimates to obtain the value of $\lambda$ are determined by CU 209. If it is determined that the pilot symbols for NB cells should be used for AFC, the FFT signal must also be processed using the NB cell timing, so long as the NB cell(s) are not time aligned with the SC. The combined estimated frequency error is then fed back to the Fe Rx 202 and the local oscillator frequency therein is adjusted accordingly. In another embodiment of the present invention, digital frequency compensation block 204 performs the frequency error correction.

As noted above, when the UE is in idle mode, the UE is not connected to a SC. In that case, the UE camps on one cell, is activated at regular time intervals, and performs paging detection from that cell. However, the apparatus of the present invention is still adapted to perform the operations described above. In that case, the UE, based on a number of parameters, determines which AFC algorithm is to be used and whether only the cell the UE is camping on or any other detected NB cells should be included in making frequency error estimates.

As noted with respect to the method of the present invention, the values to a number of parameters are obtained by, or determined by, CU 209 and operated upon in order to determine which AFC algorithms are to be used and if NB cells should be included in the frequency error estimation. The parameters include, among others, TDD/FDD, SNR, Doppler spread, service, and system BW. The apparatus of the present invention is adapted to operate upon such parameters in accordance with the method of the present invention.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1.    A method of estimating (106) frequency error in a user equipment, UE, with respect to one or more cells in a communication system the UE is operating in, the method comprising the step of:

    determining (101) or obtaining by the UE the value of at least one parameter from the group consisting of: system bandwidth, BW, for the communication system; the service being used; Signal to Noise Ratio, SNR, on a serving cell, SC, SNR on a camping cell; Doppler spread; and whether the communication system is frequency division duplex, FDD, or time division duplex, TDD; and

    **characterized by** further comprising the step of

    determining (104) whether to estimate the frequency error using a cyclic prefix, CP, correlation algorithm, or a pilot symbols algorithm, or a combination of the CP correlation algorithm and the pilot symbols algorithm, based on the value of at least one of the parameters.

2.    The method of Claim 1, further comprising, based on the value of one or more of the parameters, determining (103) by the UE whether to base estimation of the frequency error on an SC or a camping cell alone, or to base the estimation on an SC or a camping cell, and at least another cell which the UE has detected as a neighboring

3.    The method of Claim 1, further comprising, based on the UE determining that the SNR is high, the UE selecting the CP correlation algorithm for estimating (106) the frequency error, and the UE basing estimation of the frequency error on an SC or a camping cell alone.

4.    The method of Claim 1, further comprising, based on the UE determining that the communication system uses TDD, the UE selecting the CP correlation algorithm for estimating (106) the frequency error and basing estimation of the frequency error on an SC or a camping cell alone.

5.    The method of Claim 1, further comprising, based on the UE determining that the communication system uses synchronized FDD, the UE selecting the CP correlation algorithm for estimating (106) the frequency error and basing estimation of the frequency error on an SC or a camping cell alone

6.    The method of Claim 1, wherein determining (104) whether to estimate the frequency error using a cyclic prefix, CP, correlation algorithm, or a pilot symbols algorithm, or a combination of the CP correlation algorithm and the pilot symbols algorithm, based on the value of at least one of the parameters comprises the UE selecting the CP correlation algorithm based on the UE determining a high Doppler spread.

7. The method of Claim 1, wherein determining (104) whether to estimate the frequency error using a cyclic prefix, CP, correlation algorithm, or a pilot symbols algorithm, or a combination of the CP correlation algorithm and the pilot symbols algorithm, based on the value of at least one of the parameters comprises the UE selecting the CP correlation algorithm based on the UE determining that the BW is high.

8. The method of Claim 1, further comprising, based on the UE determining that the SNR is low, the UE basing estimation (106) of the frequency error on an SC or a camping cell, and one or more neighboring, NB, cells.

9. The method of claim 1, wherein determining (104) by the UE whether to estimate the frequency error using a cyclic prefix, CP, correlation algorithm, or a pilot symbols algorithm, or a combination of the CP correlation algorithm and the pilot symbols algorithm, comprises the UE selecting the pilot symbols algorithm based on the UE detecting high data rates.

10. The method of claim 1, wherein determining (104) by the UE whether to estimate the frequency error in the UE using a cyclic prefix, CP, correction algorithm, or a pilot symbols algorithm, or a combination of the CP correlation algorithm and the pilot symbols algorithm, comprises the UE selecting the pilot symbols algorithm based on the UE detecting a narrow BW.

11. An apparatus in a user equipment, UE, for estimating (106) frequency error with respect to one or more cells in a communication system the UE is operating in, the apparatus comprising:

a means for determining (101) or obtaining by the UE the value of at least one parameter from the group consisting of: system bandwidth, BW; the service being used; signal to noise ratio, SNR, on a serving cell, SC; SNR on a camping cell; Doppler spread; and whether the communication system is frequency division duplex, FDD, or time division duplex, TDD; and **characterized by**
based on the value of at least one of the parameters, a means for estimating (106) the frequency error using a cyclic prefix, CP, correlation algorithm, or a pilot symbols algorithm, or a combination of the CP correlation algorithm and the pilot symbols algorithm, including a means for determining (104), based on the value of at least one of the parameters, whether to select the CP correlation algorithm, the pilot symbols algorithm, or a combination of the CP correlation algorithm and the pilot symbols algorithm.

12. The apparatus of Claim 11, further wherein, based on the value of at least one of the parameters, the means for estimating (106) the frequency error bases estimation on either an SC or a camping cell alone, or bases estimation on an SC or a camping cell, and at least another cell which the UE has detected as a neighboring, NB, cell.

13. The apparatus of Claim 11, wherein, if the SNR is high, the means for estimating (106) the frequency error selects the CP correlation algorithm.

14. The apparatus of Claim 11, wherein, if the communication system uses TDD, the means for estimating (106) the frequency error selects the CP correlation algorithm and bases the estimation on an SC or a camping cell alone.

15. The apparatus of Claim 11, wherein, if the communication system uses synchronized FDD, the means for estimating (106) the frequency error selects the CP correlation algorithm and bases the estimation on an SC or a camping cell alone.

16. The apparatus of Claim 11, wherein, based on the UE determining a high Doppler spread, the means for estimating (106) the frequency error selects the CP correlation algorithm.

17. The apparatus of Claim 28, wherein, based on the UE determining that the BW is high, the means for estimating (106) the frequency error selects the CP correlation algorithm.

18. The apparatus of Claim 11, wherein, based on the UE determining that the SNR is low, the means for estimating (106) the frequency error bases the estimation on an SC or a camping cell, and at least another cell which the UE has detected as a neighboring, NB, cell.

19. The apparatus of Claim 11, wherein, based on the UE detecting high data rates, the means for estimating (106) the frequency error selects the pilot symbols algorithm.

**20.** The apparatus of Claim 11, wherein, based on the UE detecting a narrow BW, the means for estimating (106) the frequency error selects the pilot symbols algorithm.

**Patentansprüche**

**1.** Verfahren zum Schätzen (106) eines Frequenzfehlers in einer Benutzereinrichtung UE in Bezug auf eine oder mehrere Zellen in einem Kommunikationssystem, in dem die UE tätig ist, wobei das Verfahren die folgenden Schritte umfasst:

Bestimmen (101) oder Erhalten durch die UE des Wertes wenigstens eines Parameters aus der Gruppe bestehend aus: Systembandbreite BW für das Kommunikationssystem; dem Dienst, der verwendet wird; Rauschverhältnis SNR in einer versorgenden Zelle SC; SNR in einer wartenden Zelle; Doppler-Verbreiterung; und ob das Kommunikationssystem Frequenzduplex FDD oder Zeitduplex TDD ist, und **dadurch gekennzeichnet, dass** es ferner den folgenden Schritt umfasst:

Bestimmen (104) auf der Basis des Wertes wenigstens eines der Parameter, ob der Frequenzfehler unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen geschätzt werden soll.

**2.** Verfahren nach Anspruch 1, ferner umfassend ein Bestimmen (103) durch die UE auf der Basis des Wertes eines oder mehrerer der Parameter, ob die Schätzung des Frequenzfehlers auf einer SC oder einer wartenden Zelle allein basiert werden soll oder die Schätzung auf einer SC oder einer wartenden Zelle und wenigstens einer anderen Zelle basiert werden soll, welche die UE als eine benachbarte erkannt hat.

**3.** Verfahren nach Anspruch 1, ferner umfassend, dass auf der Basis dessen, dass die UE bestimmt, dass das SNR hoch ist, die UE den CP-Korrelationsalgorithmus zum Schätzen (106) des Frequenzfehlers auswählt, und die UE die Schätzung des Frequenzfehlers auf einer SC oder einer wartenden Zelle allein basiert.

**4.** Verfahren nach Anspruch 1, ferner umfassend, dass auf der Basis dessen, dass die UE bestimmt, dass das Kommunikationssystem TDD verwendet, die UE den CP-Korrelationsalgorithmus zum Schätzen (106) des Frequenzfehlers auswählt und die Schätzung des Frequenzfehlers auf einer SC oder einer wartenden Zelle allein basiert.

**5.** Verfahren nach Anspruch 1, ferner umfassend, dass auf der Basis dessen, dass die UE bestimmt, dass das Kommunikationssystem FDD verwendet, die UE den CP-Korrelationsalgorithmus zum Schätzen (106) des Frequenzfehlers auswählt und die Schätzung des Frequenzfehlers auf einer SC oder einer wartenden Zelle allein basiert.

**6.** Verfahren nach Anspruch 1, wobei das Bestimmen (104) auf der Basis des Wertes wenigstens eines der Parameter, ob der Frequenzfehler unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen geschätzt werden soll, umfasst, dass die UE den CP-Korrelationsalgorithmus auf der Basis dessen auswählt, dass die UE eine hohe Doppler-Verbreiterung bestimmt.

**7.** Verfahren nach Anspruch 1, wobei das Bestimmen (104) auf der Basis des Wertes wenigstens eines der Parameter, ob der Frequenzfehler unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen geschätzt werden soll, umfasst, dass die UE den CP-Korrelationsalgorithmus auf der Basis dessen auswählt, dass die UE bestimmt, dass die BW hoch ist.

**8.** Verfahren nach Anspruch 1, ferner umfassend, dass auf der Basis dessen, dass die UE bestimmt, dass das SNR niedrig ist, die UE die Schätzung (106) des Frequenzfehlers auf einer SC oder einer wartenden Zelle und einer oder mehrerer Nachbar- oder NB-Zellen basiert.

**9.** Verfahren nach Anspruch 1, wobei das Bestimmen (104) durch die UE, ob der Frequenzfehler unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen geschätzt werden soll, umfasst, dass die UE den Algorithmus mit Pilotsymbolen auf der Basis dessen auswählt, dass die UE hohe Datenraten erkennt.

10. Verfahren nach Anspruch 1, wobei das Bestimmen (104) durch die UE, ob der Frequenzfehler unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen geschätzt werden soll, umfasst, dass die UE den Algorithmus mit Pilotsymbolen auf der Basis dessen auswählt, dass die UE eine schmale BW erkennt.

11. Vorrichtung in einer Benutzereinrichtung UE zum Schätzen (106) eines Frequenzfehlers in Bezug auf eine oder mehrere Zellen in einem Kommunikationssystem, in dem die UE tätig ist, wobei die Vorrichtung umfasst:

ein Mittel zum Bestimmen (101) oder Erhalten durch die UE des Wertes wenigstens eines Parameters aus der Gruppe bestehend aus: Systembandbreite BW; dem Dienst, der verwendet wird; Rauschverhältnis SNR in einer versorgenden Zelle SC; SNR in einer wartenden Zelle; Doppler-Verbreiterung; und ob das Kommunikationssystem Frequenzduplex FDD oder Zeitduplex TDD ist, und **gekennzeichnet durch** ein Mittel zum Schätzen (106) des Frequenzfehlers auf der Basis des Wertes wenigstens eines der Parameter unter Verwendung eines Korrelationsalgorithmus mit periodischem Vorzeichen CP oder eines Algorithmus mit Pilotsymbolen oder einer Kombination des CP-Korrelationsalgorithmus und des Algorithmus mit Pilotsymbolen, umfassend ein Mittel zum Bestimmen (104) auf der Basis des Wertes wenigstens eines der Parameter, ob der CP-Korrelationsalgorithmus, der Algorithmus mit Pilotsymbolen oder eine Kombination des CP-Korrelationsalgorithmus und des Algorithmus mit Pilotsymbolen ausgewählt werden soll.

12. Vorrichtung nach Anspruch 11, wobei ferner auf der Basis des Wertes wenigstens eines der Parameter das Mittel zum Schätzen (106) des Frequenzfehlers die Schätzung auf einer SC oder einer wartenden Zelle allein basiert oder die Schätzung auf einer SC oder einer wartenden Zelle und wenigstens einer anderen Zelle basiert, welche die UE als eine Nachbar- oder NB-Zelle erkannt hat.

13. Vorrichtung nach Anspruch 11, wobei, wenn das SNR hoch ist, das Mittel zum Schätzen (106) des Frequenzfehlers den CP-Korrelationsalgorithmus auswählt.

14. Vorrichtung nach Anspruch 11, wobei, wenn das Kommunikationssystem TDD verwendet, das Mittel zum Schätzen (106) des Frequenzfehlers den CP-Korrelationsalgorithmus auswählt und die Schätzung auf einer SC oder einer wartenden Zelle allein basiert.

15. Vorrichtung nach Anspruch 11, wobei, wenn das Kommunikationssystem FDD verwendet, das Mittel zum Schätzen (106) des Frequenzfehlers den CP-Korrelationsalgorithmus auswählt und die Schätzung auf einer SC oder einer wartenden Zelle allein basiert.

16. Vorrichtung nach Anspruch 11, wobei auf der Basis dessen, dass die UE eine hohe Doppler-Verbreiterung bestimmt, das Mittel zum Schätzen (106) des Frequenzfehlers den CP-Korrelationsalgorithmus auswählt.

17. Vorrichtung nach Anspruch 28, wobei auf der Basis dessen, dass die UE bestimmt, dass die BW hoch ist, das Mittel zum Schätzen (106) des Frequenzfehlers den CP-Korrelationsalgorithmus auswählt.

18. Verfahren nach Anspruch 11, wobei auf der Basis dessen, dass die UE bestimmt, dass das SNR niedrig ist, das Mittel zum Schätzen (106) des Frequenzfehlers die Schätzung auf einer SC oder einer wartenden Zelle und wenigstens einer anderen Nachbar- oder NB-Zelle basiert, welche die UE als eine Nachbar- oder NB-Zelle erkannt hat.

19. Vorrichtung nach Anspruch 11, wobei auf der Basis dessen, dass die UE hohe Datenraten erkennt, das Mittel zum Schätzen (106) des Frequenzfehlers den Algorithmus mit Pilotsymbolen auswählt.

20. Vorrichtung nach Anspruch 11, wobei auf der Basis dessen, dass die UE eine schmale BW erkennt, das Mittel zum Schätzen (106) des Frequenzfehlers den Algorithmus mit Pilotsymbolen auswählt.

**Revendications**

1. Procédé d'estimation (106) d'erreur de fréquence dans un équipement d'utilisateur, UE, en ce qui concerne une ou des cellules dans un système de communication dans lequel l'UE fonctionne, le procédé comprenant les étapes consistant à :

déterminer (101) ou obtenir par l'UE la valeur d'au moins un paramètre dans le groupe constitué de : la bande passante du système, BW, du système de communication ; le service étant utilisé ; le rapport signal sur bruit, SNR, sur une cellule de desserte, SC ; le SNR sur une cellule de séjour ; l'étalement Doppler ; et si le système de communication est un duplex par répartition de fréquence, FDD, ou un duplex par répartition dans le temps, TDD ; et **caractérisé en ce que** il comprend en outre l'étape consistant à :

déterminer (104) si estimer l'erreur de fréquence en utilisant un algorithme de corrélation à préfixe cyclique, CP, ou un algorithme à symboles pilotes, ou une combinaison de l'algorithme de corrélation CP et de l'algorithme à symboles pilotes, sur la base de la valeur d'au moins un des paramètres.

2. Procédé selon la revendication 1, comprenant en outre, sur la base de la valeur d'une ou plusieurs des paramètres, de déterminer (103) par l'UE si baser l'estimation de l'erreur de fréquence sur une SC ou une cellule de séjour seule, ou baser l'estimation sur une SC ou une cellule de séjour, et au moins une autre cellule que l'UE a détectée comme une voisine.

3. Procédé selon la revendication 1, comprenant en outre, sur la base de l'UE déterminant que le SNR est élevé, l'UE sélectionnant l'algorithme de corrélation CP pour estimer (106) l'erreur de fréquence, et l'UE basant l'estimation de l'erreur de fréquence sur une SC ou une cellule de séjour seule.

4. Procédé selon la revendication 1, comprenant en outre, sur la base de l'UE déterminant que le système de communication utilise TDD, l'UE sélectionnant l'algorithme de corrélation CP pour estimer (106) l'erreur de fréquence et basant l'estimation de l'erreur de fréquence sur une SC ou une cellule de séjour seule.

5. Procédé selon la revendication 1, comprenant en outre, sur la base de l'UE déterminant que le système de communication utilise FDD synchronisé, l'UE sélectionnant l'algorithme de corrélation CP pour estimer (106) l'erreur de fréquence et basant l'estimation de l'erreur de fréquence sur une SC ou une cellule de séjour seule.

6. Procédé selon la revendication 1, dans lequel déterminer (104) si estimer l'erreur de fréquence en utilisant un algorithme de corrélation à préfixe cyclique, CP, ou un algorithme à symboles pilotes, ou une combinaison de l'algorithme de corrélation CP et de l'algorithme à symboles pilotes, sur la base de la valeur d'au moins un des paramètres comprend que l'UE sélectionne l'algorithme de corrélation CP sur la base de l'UE déterminant un étalement Doppler élevé.

7. Procédé selon la revendication 1, dans lequel déterminer (104) si estimer l'erreur de fréquence en utilisant un algorithme de corrélation à préfixe cyclique, CP, ou un algorithme à symboles pilotes, ou une combinaison de l'algorithme de corrélation CP et de l'algorithme à symboles pilotes, sur la base de la valeur d'au moins un des paramètres comprend que l'UE sélectionne l'algorithme de corrélation CP sur la base de l'UE déterminant que la bande passante est élevée.

8. Procédé selon la revendication 1, comprenant en outre, sur la base de l'UE déterminant que le SNR est bas,que l'UE base l'estimation (106) de l'erreur de fréquence sur une SC ou une cellule de séjour, et une ou des cellules voisines, NB.

9. Procédé selon la revendication 1, dans lequel déterminer (104) par l'UE si estimer l'erreur de fréquence en utilisant un algorithme de corrélation à préfixe cyclique, CP, ou un algorithme à symboles pilotes, ou une combinaison de l'algorithme de corrélation CP et de l'algorithme à symboles pilotes, comprend que l'UE sélectionne l'algorithme à symboles pilotes sur la base de l'UE détectant des débits de données élevés.

10. Procédé selon la revendication 1, dans lequel déterminer (104) par l'UE si estimer l'erreur de fréquence dans l'UE en utilisant un algorithme de corrélation à préfixe cyclique, CP, ou un algorithme à symboles pilotes, ou une combinaison de l'algorithme de corrélation CP et de l'algorithme à symboles pilotes, comprend que l'UE sélectionne l'algorithme à symboles pilotes sur la base de l'UE détectant une bande passante étroite.

11. Appareil dans un équipement d'utilisateur, UE, d'estimation (106) de l'erreur de fréquence en ce qui concerne une ou des cellules dans un système de communication dans lequel l'UE fonctionne, l'appareil comprenant :

un moyen pour déterminer (101) ou obtenir par l'UE la valeur d'au moins un paramètre dans le groupe constitué de : la bande passante du système, BW, du système de communication ; le service étant utilisé ; le rapport signal sur bruit, SNR, sur une cellule de desserte, SC; le SNR sur une cellule de séjour ; l'étalement Doppler ; et si le système de communication est un duplex par répartition de fréquence, FDD, ou un duplex par répartition dans le temps, TDD ; et **caractérisé par**

sur la base de la valeur d'au moins un des paramètres, un moyen pour estimer (106) l'erreur de fréquence en utilisant un algorithme de corrélation à préfixe cyclique, CP, ou un algorithme à symboles pilotes, ou une combinaison de l'algorithme de corrélation CP et de l'algorithme à symboles pilotes, incluant un moyen pour déterminer (104), sur la base de la valeur d'au moins un des paramètres, si sélectionner l'algorithme de corrélation CP, l'algorithme à symboles pilotes ou une combinaison de l'algorithme de corrélation CP et de l'algorithme à symboles pilotes.

12. Appareil selon la revendication 11, dans lequel en outre, sur la base d'au moins un des paramètres, le moyen pour estimer (106) l'erreur de fréquence base l'estimation sur soit une SC, soit une cellule de séjour seule, ou base l'estimation sur une SC ou une cellule de séjour, et au moins une autre cellule que l'UE a détectée comme une cellule voisine, NB.

13. Appareil selon la revendication 11, dans lequel, si le SNR est élevé, le moyen pour estimer (106) sélectionne l'algorithme de corrélation CP.

14. Appareil selon la revendication 11, dans lequel, si le système de communication utilise TDD, le moyen pour estimer (106) l'erreur de fréquence sélectionne l'algorithme de corrélation CP et base l'estimation sur une SC ou une cellule de séjour seule.

15. Appareil selon la revendication 11, dans lequel, si le système de communication utilise le FDD synchronisé, le moyen pour estimer (106) l'erreur de fréquence sélectionne l''algorithme de corrélation CP et base l'estimation sur une SC ou une cellule de séjour seule.

16. Appareil selon la revendication 11, dans lequel, sur la base de l'UE déterminant un étalement Doppler élevé, le moyen pour estimer (106) l'erreur de fréquence sélectionne l'algorithme de corrélation CP.

17. Appareil selon la revendication 28, dans lequel, sur la base de l'UE déterminant que la bande passante est élevée, le moyen pour estimer (106) l'erreur de fréquence sélectionne l'algorithme de corrélation CP.

18. Appareil selon la revendication 11, dans lequel, sur la base de l'UE déterminant que le SNR est bas, le moyen pour estimer (106) l'erreur de fréquence base l'estimation sur une SC ou une cellule de séjour, et au moins une autre cellule que l'UE a détectée comme une cellule voisine, NB.

19. Appareil selon la revendication 11, dans lequel, sur la base de l'UE détectant des débits de données élevés, le moyen pour estimer (106) l'erreur de fréquence sélectionne l'algorithme à symboles pilotes.

20. Appareil selon la revendication 11, dans lequel sur la base de l'UE détectant une bande passante étroite, le moyen pour estimer (106) l'erreur de fréquence sélectionne l'algorithme à symboles pilotes (106).

EP 2 095 588 B1

```
                    ┌─────────────────┐        ┌───────────────────────┐              ← 100
                 ┌──│ Performance     │ 101    │ Determine how many    │ 102
                 │  │ values of       │        │ OFDM symbols or       │
                 │  │ variables at CU │        │ subframes to perform  │
                 │  └─────────────────┘        │ frequency error       │
                 │                             │ estimates             │
                 │                             └───────────────────────┘
```

**Fig. 1**

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005029722 A